# EUROPEAN PATENT APPLICATION

(11) **EP 1 607 526 A1**
(43) Date of publication of application: **21.12.2005**
(21) Application number: 05011893.4
(22) Date of filing: 02.06.2005
(51) Int. Cl.: E01C 19/18

(54) **Combined drive and asphalt spreading system**

(30) Priority: 09.06.2004 DK 200400898
(71) Applicant: Grindsted Kommune, Park & Vej, 7200 Grindsted (DK)
(72) Inventor: Moller, Poul F., 6823 Ansager (DK); Iversen, Christian, 8670 Holsted (DK)
(74) Representative: Tellefsen, Jens J.

(57) **Abstract**

The present invention concerns a combined drive and asphalt spreading system, including a vehicle (15) with a main engine (3), a dump body (14), preferably in the form of a container with a number of doors in a rear wall, and an asphalt-spreading drag (8) arranged in connection with the dump body (14) and/or a rear end of the vehicle (15), and a hydraulic system (1) including a first oil motor (2), a second oil motor (9) and a gearbox (10) which is drivingly connected with a drive shaft (11) interconnecting wheels (16) of the vehicle (15) and the main engine (3), where the hydraulic system (1) furthermore includes an oil distributor (6) which is arranged to distribute hydraulic oil between the drive system and the asphalt spreading system.

## Description

### Scope of the Invention

The present invention concerns a combined drive and asphalt spreading system, including a vehicle with a main engine, a dump body, preferably in the form of a container with a number of doors in a rear wall, and an asphalt-spreading drag arranged in connection with the dump body and/or a rear end of the vehicle, and a hydraulic system including a first oil motor, a second oil motor and a gearbox which is drivingly connected with a drive shaft connecting wheels of the vehicle and the main engine.

### Background of the Invention

When establishing a long and wide road paving, large machines are used, including typically large self-propelled asphalt spreaders, where lorries are dumping asphalt into the hopper of the asphalt spreader before spreading on the road surface. There are different versions of asphalt spreading machines. For example, an asphalt spreader may be an independent vehicle or a unit pushing a lorry driving in front so that it attains desired speed.

When making repair work of limited extent on a road surface, smaller versions of the above mentioned contractor's machines are used for the work. However, it is a problem that repair work on a limited area is costly to do, as small machines require the same manpower as large machines, and it is expensive to invest in contractor's machines.

By repair work of limited extent is meant repair of holes and bumps in a road surface, e.g. wheel tracks, settlings, and potholes arising from wear and climatic influence, and typically found on short stretches with limited width.

In order to limit the costs of the aforementioned contractor's machines, often an asphalt-spreading drag is used which is coupled to a vehicle, typically a lorry with a dump body, so that the asphalt is loaded from the lorry and into the asphalt-spreading drag.

The lorry with the asphalt drag may normally be geared down to about 60 m per hour. However, in many cases this spreading speed is still too high, as the speed with which the asphalt is spread is adjusted to the work rate of the crew spreading and finishing the asphalt, so that the spread asphalt achieves high quality and fine finish.

Furthermore, due to the high speed of spreading, it will not be possible for the crew to repair areas outside the asphalt drag, implying that several overruns of a road surface for covering all areas to be repaired are to be performed.

In order to compensate for the relatively high spreading speed, work crews consisting of more workers are used. Typically, five persons are to be used in order to perform satisfactory repair of a road surface, where one person is driving the vehicle, another person controls the asphalt spreading, and finally three persons are required for finishing the spread asphalt.

Due to the cost of wages, it is financially burdensome to involve so many persons in the spreading process in connection with small and simple road surface repairs. For municipalities and counties, this is a limiting factor in view of how large areas they afford to repair each year. In the worst cases, this may imply that repairs on bad road stretches are postponed, and the bad road surface may cause accidents and/or considerably higher repair costs later.

In order to adjust the spreading speed, it has been attempted to mount an asphalt drag on a tractor. It has appeared that there is no great difference in using a tractor or a lorry. However, using a tractor entails another disadvantage since the tractor may drive 30 km/h on public road at the most, whereas a lorry is allowed to drive 70 km/h on public road, according to the Danish Road Traffic Act.

Due to the speed limit, much time is used for driving a tractor to and from the area where the road paving is to be repaired, and the crew has to wait unnecessarily long for a new load of asphalt, as compared to using a lorry.

In WO-A1-2004/033800 is disclosed a combined drive and asphalt spreading system relieving the above disadvantages. However, there are other drawbacks associated with using a drive system with so-called Robson drive, where a drive wheel is brought in contact with the wheels or wheel set of the vehicle.

For example, the contact between drive wheel and vehicle wheel produces much wear on the wearing surface of the wheels, whereby the tyres are to be changed more often, and uneven wear is imparted on the wheels, whereby the braking and road-holding qualities of the vehicle deteriorate. Furthermore, the power transmission from the vehicle engine to the Robson drive is not optimal.

### Object of the Invention

The object of the present invention is therefore to indicate an improved combined drive and spreading system which may:
- reduce the speed of the vehicle down to 0 meter per hour while simultaneously adjusting the spreading process to the speed of the vehicle in order thereby to achieve a more accurate relation between the drive speed/the spreading process;
- be coupled to a vehicle which thereby may be used for both laying asphalt and other haulage;
- be controlled from one work station;
- ensure optimal power transmission.

This is achieved with an asphalt spreading system as specified in the preamble of claim 1, and where the hydraulic system of the spreading system furthermore includes an oil distributor which is arranged to distribute hydraulic oil between the drive system, which includes the second oil motor and the gearbox, and the asphalt spreading system, which includes the asphalt-spreading drag and the dump body.

### Description of the invention

The hydraulic system connecting the drive system and the asphalt spreading system includes a first oil motor, a second oil motor and a gearbox.

The first oil motor circulates hydraulic oil in the hydraulic system and to the dump body of the vehicle, the asphalt-spreading drag and the second oil motor.

The second oil motor may drive the gearbox which can be engaged to and disengaged from the main engine, whereby the wheels, via the drive shaft, may
- be driven directly by the main engine, so that the vehicle functions in a normal way, or
- be driven by the second oil motor, whereby the speed of the vehicle may be reduced down to 0 meter per hour.

The gearbox is drivingly connected with the drive shaft connecting the wheels and main engine of the vehicle.

In order to achieve a more accurate relation between the driving speed and the spreading process when the gearbox is driven by the second oil motor, and when the speed of the vehicle is reduced, the hydraulic system includes an oil distributor which is arranged to distribute hydraulic oil between the drive system, which includes the second oil motor and the gearbox, and the asphalt spreading system, which includes the asphalt-spreading drag.

The oil distributor distributes hydraulic oil between the drive system, which ensures that the vehicle attains the wanted driving speed, and the spreading system, which ensures that the correct amount of asphalt is spread with the asphalt-spreading drag.

The gearbox causes reduction of the rpm from the main engine to the drive shaft, while simultaneously the vehicle is driven forward.

By arranging a combined drive and asphalt spreading system according to the present invention, flexible application of the vehicle is achieved, since it can be used both for spreading asphalt and for common transport of goods. This entails that investment in several types of lorries is not required.

It is easy to mount a combined drive and asphalt spreading system, as the drive shaft is divided and the end parts are interconnected in the gearbox, and since the gearbox may be engaged and disengaged, a mechanical arrangement for moving a drive wheel is not required to be made, whereby the gearbox may readily be mounted directly on the drive shafts of existing lorries which are typically visible under the platform or dump body.

In order to optimise the spreading process, it is important to control the amount of asphalt discharged from the dump body and down into the asphalt spreading drag. In an embodiment of the present invention, the doors of the container are constituted by side-hinged doors which are operated by a number of hydraulic cylinders, which are connected either directly to the hydraulic system of the lorry or to the hydraulic system of the combined drive and spreading system according to the present invention.

The hydraulic control implies that the gates may be opened and disposed in different positions so that the opening at the rear of the lorry container attains a desired width enabling discharge of an amount of asphalt down into the asphalt drag, the amount corresponding to the spreading speed.

Furthermore, the side-hinged gates, which may be opened at the rear, will have a funnelling function for asphalt situated in the container, so that the asphalt is led down into the desired area of the asphalt drag. It may be an advantage if the repair area is narrower than the asphalt drag.

The control of the asphalt-spreading drag is furthermore connected with the hydraulic system via an oil distributor which ensures that excess oil from the drive system is conducted to the asphalt-spreading drag and may be used for e.g. elevating and lowering the drag, whereby the thickness of the spread asphalt layer may be adjusted.

By using the combined driving and spreading system according to the present invention, the spreading speed may be reduced, and subsequently it is possible to reduce the number of persons that are to finish the laid asphalt. Thus there will only be need for one person to control the spreading of the asphalt, one person for driving the lorry and one person for finishing the spread asphalt.

In order that one person can control the entire spreading process by himself, the combined drive and asphalt spreading system according to the present invention further includes a control panel with a number of control valves and switches that are disposed on the asphalt drag and/or at the rear end of the lorry, and are adapted for controlling the components of the hydraulic system as well as the hydraulic cylinders of the container gates, the asphalt-spreading drag and possibly the dump body.

As control valves and switches are placed on the asphalt drag and/or in vicinity of the rear of the vehicle, it is possible that the entire spreading process, with regard to spreading speed, discharge of asphalt from container to asphalt drag and the asphalt drag itself may be controlled by one person working close to the rear end of the lorry.

In an embodiment of the invention, these control valves and switches may be remotely controlled so that one person possibly may carry a console and control the spreading process from the console. However, this requires that a receiver is provided in connection with asphalt-spreading drag and vehicle.

In another embodiment of the invention, it is possible to construct the control panel so that the front wheel set of the lorry may be controlled, implying that it is not necessary to have a person sitting in the lorry.

This is, however, only a possibility when/if this spreading system is allowed by the work environment authorities that are to judge whether it is safe to remotely control a lorry from an external position. If the spreading system is allowed, only two persons are required for performing the asphalt spreading process.

There are the following advantages of using a combined drive and spreading system according to the present invention:
- the initial cost is low and the system is easy to mount on the drive shafts of most standard lorries;
- the quality and finish of the road surface is improved as the asphalt spreading speed is adjusted to the driving speed of the vehicle so that time is provided for finishing the spread asphalt.
- repair work of limited extent in the road surface may be performed in one and the same work operation;
- control of the drive system is more stable/accurate, since the power transmission is effected directly;
- the asphalt drag is adapted to be connected to and disconnected from the rear end of the lorry, entailing that it is not necessary to invest in self-propelled asphalt spreaders.

### Short Description of the Drawing

The invention is explained in more detail in the following with reference to the accompanying drawing, where:
Fig. 1 shows a schematic outline of the hydraulic system in a combined drive and spreading system according to the present invention; and
Fig. 2 shows disposition of a gearbox in connection with a drive shaft.

### Detailed Description of the Invention

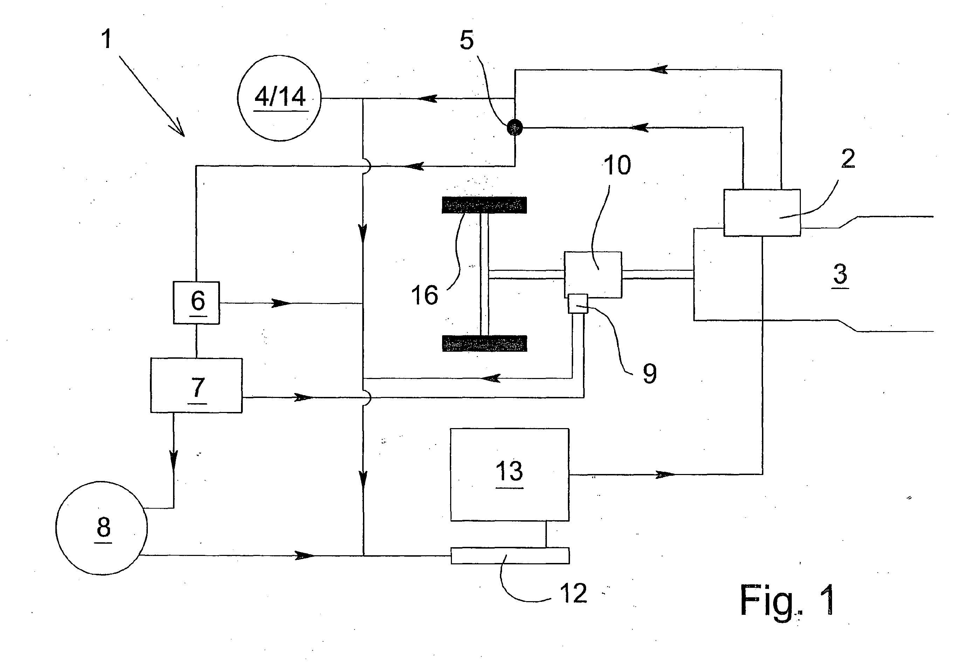

Fig. 1 shows the hydraulic system 1 in the combined drive and asphalt spreading system, where the hydraulic system includes an oil motor 2 which is connected to the main engine 3/hydraulic system of the lorry.

The oil pump 2 is a double pump (preferably 2 x 56 litres) conducting hydraulic oil to the combined drive and spreading system and on to cylinders 4 at the doors (not shown) of the dump body 14.

From oil motor 2, the hydraulic oil is conducted through a three-way valve 5 and on to an over-pressure valve 6 and then to an oil distributor 7 that ensures distribution of the hydraulic oil to oil motor 9 and the asphalt-spreading drag 8.

The oil motor 9 drives gearbox 10 which is mounted on drive shaft 11 interconnecting the wheels 16 and main engine 3 of the vehicle.

Return oil from asphalt drag 8 and oil motor 9 is returned to an oil cooler 12 and a tank 13, whereafter it is pumped into the hydraulic system 1 or dump body 14 via oil motor 2.

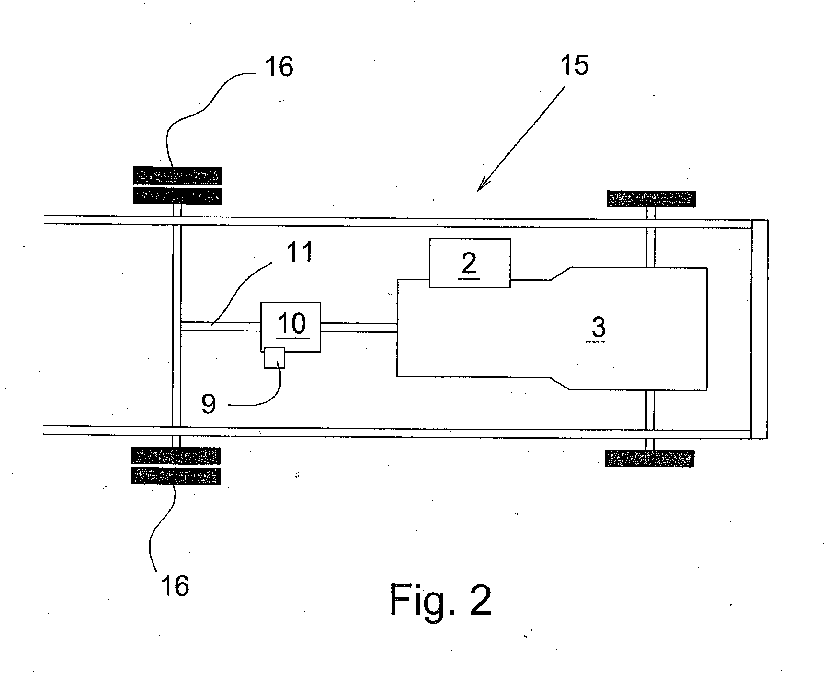

Fig. 2 shows a plan section of vehicle 15, where main engine 3 is disposed at one end, typically in connection with the driver's cabin of the vehicle 15. The main engine 3 is drivingly connected to the wheels 16 via a drive shaft 11, and gearbox 10 is mounted directly on this drive shaft 11 and driven by oil motor 9.

## Claims

1. Combined drive and asphalt spreading system, including a vehicle (15) with a main engine (3), a dump body (14), preferably in the form of a container with a number of doors in a rear wall, and an asphalt-spreading drag (8) arranged in connection with the dump body (14) and/or a rear end of the vehicle (15), and a hydraulic system (1) including a first oil motor (2), a second oil motor (9) and a gearbox (10) which is drivingly connected with a drive shaft (11) connecting wheels (16) of the vehicle (15) and the main engine (3), **characterised in that** the hydraulic system (1) furthermore includes an oil distributor (6) which is arranged to distribute hydraulic oil between the drive system, which includes the second oil motor (9) and the gearbox (10), and the asphalt spreading system, which includes the asphalt-spreading drag (8) and the dump body (14).

2. Combined drive and asphalt spreading system according to claim 1, **characterised in that** the first oil motor (2) is driven by the main engine (3), and that the second oil motor (9) drives the gearbox (10).

3. Combined drive and asphalt-spreading system according to claim 1, **characterised in that** the doors of the container are constituted by side-hinged doors which are operated by a number of hydraulic cylinders (4).

4. Combined drive and asphalt spreading system (1) according to claim 1, **characterised in that** it further includes a control panel with a number of control valves and switches provided on the asphalt-spreading drag (8) and/or the rear end of the vehicle (15), and which is adapted for controlling the hydraulic system (1), the hydraulic cylinders (4) of the container doors and the asphalt-spreading drag (8).
